# EUROPÄISCHE PATENTSCHRIFT

(11) **EP 2 780 410 B1**
(45) Veröffentlichungstag und Bekanntmachung des Hinweises auf die Patenterteilung: **06.09.2017**
(21) Anmeldenummer: 12787434.5
(22) Anmeldetag: 14.11.2012
(51) Int. Cl.: C08K 5/30, C08G 59/40

(54) **ALKYL- ODER DIALKYL-SEMICARBAZONE ALS HÄRTER FÜR EPOXIDHARZE**
ALKYL OR DIALKYL-SEMICARBAZONES AS A HARDENERS FOR EPOXY RESIN
ALKYL-SEMICARBAZONES OU DIALKYL-SEMICARBAZONES UTILISÉES COMME DURCISSEUR POUR DES RÉSINES EPOXY

(30) Priorität: 15.11.2011 DE 102011118501
(43) Veröffentlichungstag der Anmeldung: 24.09.2014
(73) Patentinhaber: AlzChem AG, 83308 Trostberg (DE)
(72) Erfinder: BRANDL, Monika, 83342 Tacherting (DE); EBNER, Martin, 86438 Kissing (DE); KRIMMER, Hans-Peter, 84558 Kirchweidach (DE)
(74) Vertreter: Weickmann & Weickmann PartmbB
(86) Internationale Anmeldenummer: PCT/EP2012/072588
(87) Internationale Veröffentlichungsnummer: WO 2013/072354

(56) Entgegenhaltungen:
- WO-A1-2011/144659
- US-A- 3 274 231
- DATABASE WPI Week 199120 Thomson Scientific, London, GB; AN 1991-147017 XP002699309, -& SU 1 574 618 A (KROYAN S A) 30. Juni 1990 (1990-06-30)

## Beschreibung

Die vorliegende Erfindung betrifft die Verwendung von Alkyl- oder Dialkyl-Semicarbazonen als Härter zur Härtung von Epoxidharzen und ein Verfahren zur kontrollierten Härtung von Epoxidharz-Zusammensetzungen sowie Epoxidharz-Zusammensetzungen.

Die Verwendung von duroplastischen Epoxidharzen ist aufgrund ihrer guten Chemikalienbeständigkeit, ihrer sehr guten thermischen und dynamisch-mechanischen Eigenschaften sowie ihres hohen elektrischen Isolationsvermögens weit verbreitet. Darüber hinaus zeigen Epoxidharze eine gute Haftung auf vielen Substraten und sind somit bestens für den Einsatz in Faserverbundwerkstoffen (Composites) geeignet. Für den Einsatz in Faserverbundwerkstoffen sind sowohl eine gute Benetzung der Faser, d. h. eine niedrige Viskosität der gewählten Harzformulierung zur Compositeherstellung als auch hohe mechanische Eigenschaften wünschenswert.

Zur Herstellung von Formteilen aus Faserverbundwerkstoffen werden verschiedene Verfahren genutzt, wie beispielsweise das Prepregverfahren, verschiedene Infusions- oder Injektionsverfahren, hierbei insbesondere das RTM-Verfahren (Resin Transfer Molding). Von diesen Verfahren haben insbesondere die Infusions- oder Injektionsverfahren in den letzten Jahren an Bedeutung gewonnen. So werden beispielsweise in den Infusionsverfahren, bei denen in einem offenen Werkzeug befindliche trockene Verstärkungsmaterialien, wie beispielsweise Fasermatten, Vliesstoffe, Gewebe oder Gewirke, mit einer dichten Vakuumfolie abgedeckt und nach Anlegen des Vakuums über Verteilerkanäle mit Harzformulierungen getränkt. Diese Verfahren weisen den Vorteil auf, dass große Elemente mit komplizierten Geometrien in kurzer Zeit geformt werden können.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität und damit sehr niedrigen Latenz werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Hierbei bedeutet "latent", dass eine Mischung der Einzelkomponenten unter definierten Lagerbedingungen stabil vorliegt. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren (lagerfähig sind), jedoch unter Erwärmung je nach Energieeintrag bereitwillig ausreagieren. Für solche einkomponentigen Epoxidharz-Formulierungen ist beispielsweise Dicyandiamid ein besonders geeigneter und auch kostengünstiger Härter. Unter Umgebungsbedingungen können entsprechende Harz-Härter-Mischungen bis zu 12 Monaten gebrauchsfähig gelagert werden.

Urone sind seit langer Zeit als Härtungsbeschleuniger zur beschleunigten Härtung von Epoxidharzen bekannt. So werden diese Urone in einer Vielzahl von Anwendungen in Kombination mit latenten Härtern wie beispielsweise Dicyandiamid eingesetzt. So wird die Verwendung von Dicyandiamid als latenter Härter in Kombination mit verschiedensten Uronen als Härtungsbeschleuniger auch in einer Vielzahl an Patentanmeldungen beschrieben. In diesem Zusammenhang sei beispielsweise auf die folgenden Dokumente verwiesen EP 603131 A1, EP 429395 A2, US 2,993,044 A, US 3,386,956 A, US 3,789,071, EP 2295483 A1, WO 2004/106402 A1, WO 2007/062853 A1.

Darüber hinaus sind Semicarbazone als Härtungsbeschleuniger zur beschleunigten Härtung von Epoxidharzen mittels hitzeaktivierbarer Härter wie Dicyandiamid bekannt. Untersuchungsergebnisse hierzu haben gezeigt, dass diese Semicarbazone analog zu den bekannten Uronen die Härtung von Epoxidharzen mittels hitzeaktivierbaren latenten Härten beschleunigen (nicht veröffentlichte Patentanmeldung DE 102010020882.5). SU 1574618 A, welche Klebstoffzusammensetzungen betrifft, beschreibt die Zugabe von N,N-Diethyl-N'-(3-trifluormethylphenyl)harnstoff (I) und 5-Nitrofurfural-Semicarbazon (II) zu einer Zusammensetzung, umfassend Epoxidbisphenol A Harz, Dicyano-Diamid sowie Lösungsmittel. Keine Erwähnung finden Semicarbazone der Formel (I) in der Literatur als Härter zur Härtung oder Vernetzung von Epoxidharzen.

Leider weisen Epoxidharzmischungen mit hoch latentem Dicyandiamid oder anderen hoch latenten Härtern den Nachteil auf, dass diese Epoxidharzmischungen sehr schnell und mit hohem Wärmeaustrag, d.h. unter Freisetzung von hohen Energiemengen, aushärten. Dieser Effekt ist umso deutlicher, wenn zur Härtung von Epoxidharzmischungen Dicyandiamid und ein Härtungsbeschleuniger, wie beispielsweise ein Uron oder ein Semicarbazon eingesetzt wird. Diese Tatsache stellt für die mit der Konstruktion und Herstellung von Formteilen befassten Fachleute ein erhebliches Problem dar, da mit der freiwerdenden Energie die Formkörper je nach Schichtdicke Eigenspannungen erhalten. Diese Eigenspannungen führen zu Rissen in den Formteilen, wodurch die Formteile die geforderte mechanische Stabilität nicht erreichen. Sollte der Wärmeaustrag in Abhängigkeit der Schichtdicke viel zu hoch sein, so sind in Einzelfällen diese Formkörper gänzlich unbrauchbar.

Die Anwendung von Composite-Bauteilen als Ersatz von Metall- bzw. Holzbauteilen, wie zum Beispiel in Windkraftanlagen, wird zunehmend relevanter. So planen beispielsweise die Hersteller von Windkaftanlagen immer größere Aggregate, die von größeren Rotorblättern angetrieben werden. Bei der Herstellung dieser Rotorblätter muss die im Herstellungsprozess entstehende Wärme möglichst effektiv und gleichmäßig abgeführt werden, damit das Bauteil während dem Herstellungsprozess nicht thermisch geschädigt wird. Dies kann bei Verwendung von Epoxidharz-Zusammensetzungen die als Härtungssystem Dicyandiamid als Härter und Urone oder Semicarbazone als Härtungsbeschleuniger umfassen nur unzureichend gewährleistet werden, da diese Systeme sehr schnell reagieren und große Wärmemengen innerhalb von kürzester Zeit abgeben. Durch die Härtung bei niedrigeren Temperaturen kann zwar die Reaktionsgeschwindigkeit in gewissen Bereichen gesteuert werden; allerdings wird in großen und massiven Bauteilen mit großen Schichtdicken an Epoxidharzen, wie beispielsweise Rotorblätter, sehr schnell ein Wärmestau durch ungenügende Wärmeabführung beobachtet. Daraus resultiert, dass sich die Härtungsreaktion unkontrolliert beschleunigt. Letztendlich resultiert hieraus eine thermische Schädigung im Bauteil.

Zur spannungsfreien Herstellung von großen und massiven Strukturbauteilen müssen diese möglichst gleichmäßig und damit auch langsamer gehärtet werden. Mit den üblichen Härtungssystemen aus Dicyandiamid als Härter und Beschleuniger ist dies nur bedingt realisierbar, da es durch ungleichmäßige Wärmeabführung zu lokalen Wärmestaus und damit zu einer ungleichmäßigen Härtung kommen kann. Diese Gefahr ist besonders bei unregelmäßigen Bauteilen gegeben.

Daher liegt der vorliegenden Erfindung die Aufgabe zugrunde neuartige Härter und Verfahren zur kontrollierten Härtung von Epoxidharz-Zusammensetzungen, insbesondere für massive Bauteile mit großen Schichtdicken an Epoxidharz, sowie die hierfür benötigten Epoxidharz-Zusammensetzungen bereitzustellen. Diese neuen Härter oder Verfahren sollen ein gleichmäßiges Härten über einen gegebenen Zeitraum ermöglichen, ohne dass in den herzustellenden Form- oder Bauteilen Eigenspannungen oder sonstigen thermischen Schädigungen erfolgen.

Diese Aufgaben werden gelöst durch ein Verfahren und Verwendung gemäß Anspruch 1 und 2 der vorliegenden Erfindung.

Damit ist gemäß einer ersten Ausführung die Verwendung von Alkyl- oder Dialkyl-Semicarbazonen der allgemeinen Formel (I) oder Mischungen hiervon, als Härter zur Härtung von Epoxidharzen mit mindestens einer reaktiven Epoxidgruppe oder von Epoxidharz-Zusammensetzungen umfassend mindestens ein Epoxidharz mit mindestens einer reaktiven Epoxidgruppe, Gegenstand der vorliegenden Erfindung, mit 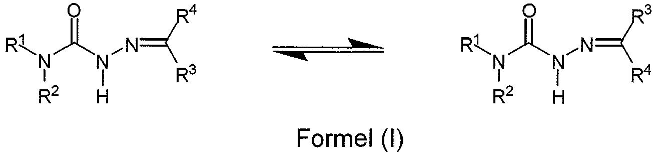 wobei für die Reste jeweils gleichzeitig oder unabhängig voneinander gilt:
R¹ = verzweigtes oder lineares Alkyl oder Cycloalkyl,
R² = Wasserstoff, verzweigtes oder lineares Alkyl oder Cycloalkyl,
R³ = verzweigtes oder lineares Alkyl oder Cycloalkyl;
R⁴ = Wasserstoff, verzweigtes oder linears Alkyl oder Cycloalkyl; oder
R¹ = verzweigtes oder lineares Alkyl oder Cycloalkyl,
R² = Wasserstoff, verzweigtes oder lineares Alkyl oder Cycloalkyl,
R³ und R⁴ = gemeinsam unter Bildung eines Ringes Alkylen,
wobei die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst.

Gemäß einer zweiten Ausführung ist damit auch ein Verfahren zur kontrollierten Härtung von Epoxidharz-Zusammensetzungen umfassend mindestens ein Epoxidharz mit mindestens einer reaktiven Epoxidgruppe, mittels Alkyl- oder Dialkyl-Semicarbazonen der allgemeinen Formel (I) oder Mischungen hiervon als Härter Gegenstand der vorliegenden Erfindung, mit 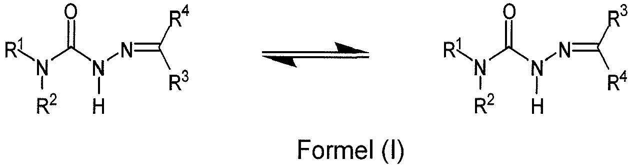 wobei für die Reste jeweils gleichzeitig oder unabhängig voneinander gilt:
R¹ = verzweigtes oder lineares Alkyl oder Cycloalkyl,
R² = Wasserstoff, verzweigtes oder lineares Alkyl oder Cycloalkyl,
R³ = verzweigtes oder lineares Alkyl oder Cycloalkyl;
R⁴ = Wasserstoff, verzweigtes oder lineares Alkyl oder Cycloalkyl; oder
R¹ = verzweigtes oder lineares Alkyl oder Cycloalkyl,
R² = Wasserstoff, verzweigtes oder lineares Alkyl oder Cycloalkyl,
R³ und R⁴ = gemeinsam unter Bildung eines Ringes Alkylen,
wobei die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst.

Erfindungsgemäß umfasst die gesamte Epoxidharz-Zusammensetzung neben den Alkyl- oder Dialkyl-Semicarbazonen der allgemeinen Formel (I) keine weiteren Härter und/oder Co-Härter. Insbesondere ist die Epoxid-Zusammensetzung frei von weiteren Härtern und/oder Co-Härtern. Übliche Härter und/oder Co-Härter sind beispielsweise aliphatische, cycloaliphatische und aromatische Amine, Polyamine, Amido-Amine, Polyamide, Ketimine, Mercaptane, Isocyanate, Anhydride, Carbonsäuren, Polyphenole, Aminoharze und Phenolharze sowie Dicyandiamid.

Frei von weiteren Härtern und/oder Co-Härtern bedeutet dabei insbesondere, dass das Gesamtsystem insgesamt einen Gehalt an weiteren Verbindungen, die als Härter und/oder Co-Härter angesehen werden können, von weniger als 1 Gew.-%, bezogen auf die gesamte Epoxidharz-Zusammensetzung, insbesondere von weniger als 0,1 Gew.-%, noch mehr bevorzugt von weniger als 0,01 Gew.-% und besonders bevorzugt von 0 Gew.-% aufweist.

Die erfindungsgemäße Epoxidharz-Zusammensetzung ist frei von Härtungsbeschleunigern und/oder Katalysatoren zur Härtung von Epoxidharzen, abgesehen von dem Alkyl- oder Dialkyl-Semicarbazon der allgemeinen Formel (I) oder Mischungen hiervon. Übliche Härtungsbeschleuniger und/oder Katalysatoren zur Härtung von Epoxidharzen sind beispielsweise tertiäre Amine, Imidazole, Urone, Verbindungen auf der Basis von Bortrifluorid, Titanatverbindungen.

Frei von weiteren Härtungsbeschleunigern und/oder Katalysatoren zur Härtung von Epoxidharzen bedeutet dabei insbesondere, dass das Gesamtsystem insgesamt einen Gehalt an weiteren Verbindungen, die als Härtungsbeschleuniger und/oder Katalysatoren zur Härtung von Epoxidharzen angesehen werden können, von weniger als 1 Gew.-%, bezogen auf die gesamte Epoxidharz-Zusammensetzung, insbesondere von weniger als 0,1 Gew.-%, noch mehr bevorzugt von weniger als 0,01 Gew.-% und besonders bevorzugt von 0 Gew.-% aufweist.

Die Epoxidharz-Zusammensetzung ist neben dem Alkyl- oder Dialkyl-Semicarbazon der allgemeinen Formel (I) oder Mischungen davon frei von weiteren Härtern, Co-Härtern, Härtungsbeschleunigern und anderen Katalysatoren zur Härtung von Epoxidharzen.

Überraschender Weise hat sich herausgestellt, dass eine kontrollierte Härtung von Epoxidharzen oder Epoxidharz-Zusammensetzungen mittels Alkyl- oder Dialkyl-Semicarbazon der allgemeinen Formel (I) oder Mischungen hiervon als alleinige Härter zur Härtung von Epoxidharzen, d.h. in Abwesenheit von weiteren Härtern, Co-Härtern, Härtungsbeschleunigern oder anderer Katalysatoren ermöglicht werden kann. Intensive Untersuchungen haben zudem gezeigt, dass Epoxidharz-Zusammensetzungen besonders schonend insbesondere ohne Einsatz von hitzeaktivierbaren Härtern vollständig gehärtet werden können. Somit sind Alkyl- oder Dialkyl-Semicarbazon der allgemeinen Formel (I) oder Mischungen hiervon nicht nur als Härtungsbeschleuniger zur beschleunigten Härtung mittels hitzeaktivierbarer Härter sondern als Härter per se und insbesondere als alleinige Härter einsetzbar. Somit kann mit den neuartigen Härtern auch ein Härtungssystem zur Verfügung gestellt werden, das aus nur einer Komponente besteht. Hierdurch entfallen ein Einstellen der Anteile von Härter und Beschleuniger vor der Herstellung der Epoxidharz-Zusammensetzung und ein aufwendiges Mischen der Komposition aus Härter und Beschleuniger in der Epoxid-Zusammensetzung.

Weiterhin überraschend hat sich gezeigt, dass Alkyl- oder Dialkyl-Semicarbazone der allgemeinen Formel (I) oder Mischungen hiervon in ihren Härtungsprofilen vergleichbar sind mit bekannten Härtern wie beispielsweise Dicyandiamid, jedoch sind die Latenzen in Epoxidharzen oder in Epoxidharz-Zusammensetzungen nicht sehr ausgeprägt. Der Vorteil dieser Härter liegt vielmehr in der schonenden Art der Härtung, wobei pro Zeiteinheit im Vergleich zu bekannten Härtern weniger Energie frei wird und diese Energie leicht abgeführt werden kann.

Damit wird weiterhin eine Verwendung oder ein Verfahren der beschriebenen Art bevorzugt, in der/ dem die Epoxidharz-Zusammensetzung das Alkyl- oder Dialkyl-Semicarbazon der allgemeinen Formel (I) oder Mischungen hiervon in einer Menge umfasst, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Erfindungsgemäß härtet die Epoxidharz-Zusammensetzung bevorzugt vollständig aus. Dies bedeutet insbesondere, dass die Epoxidharz-Zusammensetzung zu ≥ 80 %, bevorzugt zu ≥ 90 %, mehr bevorzugt zu ≥ 95 %, noch mehr bevorzugt zu ≥ 98 %, insbesondere zu ≥ 99 % und am meisten bevorzugt zu 100 % aushärtet. Entsprechend haben die Epoxy-Gruppen in der ausgehärteten Epoxidharz-Zusammensetzung insbesondere zu ≥ 80 %, bevorzugt zu ≥ 90 %, mehr bevorzugt zu ≥ 95 %, noch mehr bevorzugt zu ≥ 98 %, insbesondere zu ≥ 99 % und am meisten bevorzugt zu 100 % reagiert.

Der Anteil an nicht umgesetzten Epoxy-Gruppen in der ausgehärteten Epoxidharz-Zusammensetzung beträgt insbesondere < 20 %, bevorzugt < 10 %, mehr bevorzugt < 5 %, noch mehr bevorzugt < 2 %, insbesondere < 1% und am meisten bevorzugt 0 %. Somit kann eine besonders spannungsarme Härtung von Epoxidharz-Zusammensetzungen ermöglicht werden. In den somit unter Verwendung eines Härters aus der Gruppe der Semicarbazone hergestellten Formteilen sind keinerlei Risse oder sonstige thermische Schädigungen festzustellen. Die Härtung erfolgt hierbei über einen gegebenen Zeitraum besonders gleichmäßig, wodurch keine lokalen Überhitzungen oder Wärmestaus beobachtet werden. Somit kann auch ein Verfahren zur Herstellung von Formteilen bereitgestellt werden, das in Bezug auf die herzustellenden Formteile einen hohen Qualitätsstandard sichert.

Der maximale Wärmestrom wird erfindungsgemäß isotherm mit einem Wärmestrom-Differenzkalorimeter (DSC822e, Mettler Toledo) gemessen und das Peak-Maximum als maximaler Wärmestrom bestimmt. Einzuhaltende Prüfungsbedingungen sind mit den Beispielen aufgeführt.

Alternativ oder gleichzeitig können die Einsatzmengen der erfindungsgemäßen Härter jedoch auch derart eingestellt sein, dass auf 100 Teile Harz 1 bis 15 Teile Härter, vorzugsweise mindestens 3 Teile und ganz besonders bevorzugt mindestens 4 Teile eingesetzt werden, wobei ebenfalls gleichzeitig oder unabhängig voneinander insbesondere höchstens 12 Teile, insbesondere höchstens 10 Teile und ganz besonders bevorzugt höchstens 8 Teile eingesetzt werden. Auch eine Kombination mehrerer erfindungsgemäßer Härter oder eine Kombination wird durch diese Erfindung mit abgedeckt.

Die Gesamtmenge an erfindungsgemäßen Härtern der Formel (I) beträgt insbesondere 1-15 Teile, bevorzugt 2-15 Teile, mehr bevorzugt 2-12 Teile, noch mehr bevorzugt 3-12 Teile, insbesondere bevorzugt 4-12 Teile, und noch mehr bevorzugt 5-12 Teile auf 100 Teile Harz. Unter Harz wird dabei die Gesamtmenge an Expoxidharz verstanden.

In einer weiteren bevorzugten Ausführungsform beträgt die Einsatzmenge an erfindungsgemäßen Härtern der Formel (I) 3-12, insbesondere 4-12, bevorzugt 4-10, und noch mehr bevorzugt 4-8 Teile auf 100 Teile Harz.

Die Härtung der Epoxidharze mit Hilfe der erfindungsgemäß eingesetzten Härter erfolgt in der Regel bei Temperaturen von 60 bis 180°C. Die Wahl der Härtungstemperatur ist abhängig von der spezifischen Verarbeitungs- und Produktanforderung und kann über die Formulierung vor allem durch Regulierung der Härtermengen sowie durch Zugabe von Additiven variiert werden. Hierbei ist es unerheblich, auf welche Art den Harzformulierungen Energie zugeführt wird. Beispielhaft kann dies in Form von Wärme durch einen Ofen oder Heizelemente, aber ebenso mittels Infrarotstrahlern oder Anregung durch Microwellen oder sonstiger Strahlen geschehen.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden.

Additive zur Verbesserung der Verarbeitbarkeit der unausgehärteten Epoxidharz-Zusammensetzungen oder zur Anpassung der thermisch-mechanischen Eigenschaften der duroplastischen Produkte an das Anforderungsprofil umfassen beispielsweise Reaktiwerdünner, Füllstoffe, Rheologieadditive wie Thixotropierungsmittel oder Dispergieradditive, Defoamer, Farbstoffe, Pigmente, Zähmodifikatoren, Schlagzähverbesserer oder Brandschutzadditive.

Im Zusammenhang mit der vorliegenden Erfindung ist unter einem Alkyl- oder Dialkyl-Semicarbazon eine Substanz zu verstehen, die die mit Formel (I) wiedergegebene Struktur aufweist.

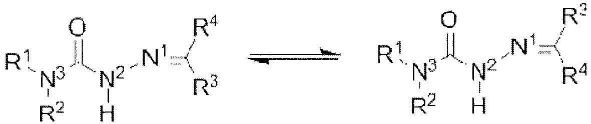

Dabei weist ein Alkyl- oder Dialkyl-Semicarbazon gemäß der vorliegenden Erfindung an N³ (Stickstoff der Semicarbazon-Gruppe benachbart zur Carbonylgruppe) immer mindestens einen Alkyl- oder Cycloalkyl-Substituenten auf. Entsprechend steht der Rest R¹ in den erfindungsgemäßen Verbindungen der allgemeinen Formel (I) für verzweigtes oder lineares Alkyl- oder Cycloalkyl, nicht aber für Wasserstoff (R¹ ≠H). R² kann Wasserstoff bedeuten. In diesem Fall befindet sich am N³ Stickstoff ein Alkyl- oder Cycloalkyl-Rest. In einer weiteren Ausführungsform kann R² verzweigtes oder lineares Alkyl oder Cycloalkyl bedeuten. In dieser Ausführungsform befinden sich an N³ zwei Alkyl- bzw. Cycloalkylgruppen.

Des Weiteren weist der Kohlenstoff der Semicarbazongruppe, welcher benachbart zum Stickstoff N¹ (Stickstoff der Semicarbazongruppe, benachbart zu N²) ist, immer mindestens einen Alkyl- oder Cycloalkyl-Substituenten auf. Entsprechend bedeutet der Rest R³ verzweigtes oder lineares Alkyl oder Cycloalkyl, nicht aber Wasserstoff (R³ ≠ H). Der Rest R⁴ kann für Wasserstoff stehen. In diesem Fall befindet sich am Kohlenstoff der Semicarbazongruppe ein verzweigter oder linearer Alkylrest oder Cycloalkylrest. Weiterhin kann R⁴ für verzweigtes oder lineares Alkyl oder Cycloalkyl stehen. In diesem Fall weist der Kohlenstoff der Semicarbazongruppe zwei Alkylreste bzw. Cycloalkylreste auf. Der Stickstoff N² (Stickstoff der Semicarbazongruppe zwischen der Carbonylgruppe und der -N=C-Gruppe) weist immer einen Wasserstoff-Substituenten auf. Es kann jedoch auch vorgesehen sein, dass die Substituenten R³ und R⁴ gemeinsam unter Bildung eines Ringes Alkylen mit der angegebenen Definition bedeuten. Die Substituenten R¹ bis R⁴ sind über die gegebenen Definitionen breit variierbar.

Strukturell können die Semicarbazone sowohl als geometrische Isomere ((Z)-, (E)-Isomere) oder aber in den jeweiligen tautomeren Formen (Keto-Enol-Tautomere) vorliegen. In Abhängigkeit der Reste R¹ bis R⁴ erhält man die Verbindungen dabei in fester, halbfester oder in flüssig-öliger Form. Das Substitutionsmuster bestimmt auch die Löslichkeit der Semicarbazone in Lösungsmitteln oder in Epoxidharzen.

Gemäß der vorliegenden Erfindung können insbesondere solche Alkyl- oder Dialkyl-Semicarbazon der allgemeinen Formel (I) oder Mischungen hiervon als Härter eingesetzt werden für die gleichzeitig oder unabhängig gilt:
R¹ = verzweigtes oder lineares C1- bis C6-Alkyl oder C1- bis C6-Cycloalkyl,
R² = Wasserstoff, verzweigtes oder lineares C1- bis C6-Alkyl oder C1- bis C6-Cycloalkyl,
R³ = verzweigtes oder lineares C1- bis C6-Alkyl oder C1- bis C6-Cycloalkyl,
R⁴ = Wasserstoff, verzweigtes oder lineares C1- bis C6-Alkyl oder C1- bis C6-Cycloalkyl;
oder
R¹ = verzweigtes oder lineares C1- bis C6-Alkyl oder C1- bis C6-Cycloalkyl,
R² = Wasserstoff, verzweigtes oder lineares C1- bis C6-Alkyl oder C1- bis C6-Cycloalkyl,
R³ und R⁴ = gemeinsam unter Bildung eines Ringes Alkylen.

Alkyl oder C1- bis C6-Alkyl kann insbesondere Methyl, Ethyl, Propyl (n-Propyl), Methylethyl (iso-Propyl), Butyl (n-Butyl), 2-Methylpropyl (iso-Butyl), 1-Methylpropyl (sec-Butyl), 1,1-Dimethylethyl, (tert-Butyl), Pentyl, 1-Methylbutyl, 2-Methylbutyl, 3-Methylbutyl, 2,2-Dimethylpropyl, 1,2-Dimethylpropyl, 1,1-Dimethylpropyl, 1-Ethylpropyl, Hexyl, 1-Methypentyl, 2-Methylpentyl, 3-Methylpentyl, 4-Methylpentyl, 1,1-Dimethylbutyl, 2,2-Dimethylbutyl, 3,3-Dimethylbutyl, 1-Ethylbutyl, 2-Ethylbutyl, 1-Methyl-1-Ethylpropyl, 1-Ethyl-2-Methylpropyl oder 1,1,2-Trimethylpropyl bedeuten.

Besonders bevorzugt sind Verbindungen gemäß Formel (I) mit (gleichzeitig oder unabhängig voneinander) R¹ = Methyl oder Ethyl, R² = Methyl oder Ethyl, und R³ = Methyl, Ethyl, Propyl oder iso-Propyl und R⁴ = Methyl, Ethyl, Propyl oder Methylethyl (iso-Propyl).

Gemäß der vorliegenden Erfindung kann R³ und R⁴ auch gemeinsam unter Bildung eines Ringes Alkylen, insbesondere C2- bis C11-Alkylen, und weiterhin bevorzugt Alkylen oder C2- bis C11-Alkylen jeweils mit der allgemeinen Formel -(CH₂)ₙ- mit 2 ≤ n ≤ 11, insbesondere -(CH₂)ₙ- mit 2 ≤ n ≤ 6, bedeuten. Insbesondere kann hierbei vorgesehen sein, dass R³ und R⁴ zusammen Ethylen, Propylen, Butylen, Pentylen oder Hexylen bedeuten, wobei diese Alkylenreste ihrerseits gegebenenfalls einfach oder mehrfach mit Alkylresten, insbesondere C1- bis C6-Alkyl, substituiert sein können. In diesem Fall weisen R³ und R⁴ zusammen bevorzugt die Formel -(CHR⁵)ₙ- auf, wobei R⁵ bei jedem Auftreten unabhängig voneinander H oder C₁- bis C₆-Alkyl bedeutet.

Im Zusammenhang mit der vorliegenden Erfindung soll weiterhin unter Cycloalkyl insbesondere ein monocyclischer Cycloalkylrest mit 3 bis 7 Kohlenstoffatomen (C3- bis C7-Cycloalkyl) verstanden sein, insbesondere ein Cycloalkyl- oder C3- bis C7-Cycloalkyl-Substituent, der die allgemeinen Formel CₙH₂ₙ₋₁ mit n = 3 bis 7 aufweist. Weiterhin bevorzugt kann Cycloalkyl oder C3- bis C7-Cycloalkyl Cyclopropyl, Cyclobutyl, Cyclopentyl, Cyclohexyl oder Cycloheptyl bedeuten, wobei diese Cycloalkylreste ihrerseits weiterhin bevorzugt einfach oder mehrfach mit Alkyl oder C1-bis C6-Alkyl der oben wiedergegebenen Bedeutung substituiert sein können.

Die Herstellung von Semicarbazonen ist in der Literatur beschrieben. Das Substitutionsmuster ist breit variierbar. Eine gängige Methode zur Herstellung ist die Synthese ausgehend von Semicarbaziden mit Ketonen oder Aldehyden. Hierbei wird das Substitutionsmuster des Semicarbazons durch die eingesetzten Edukte bestimmt, wobei die Reste R¹ und R² Substituenten des eingesetzten Semicarbazids und die Substituenten R³ und R⁴ durch den eingesetzten Aldehyd oder das Keton bestimmt werden. Der synthetische Zugang zu Semicarbaziden ist ebenfalls in der Literatur beschrieben. So können beispielsweise das 4,4-Dimethylsemicarbazid (R¹ = R² = Methyl) als auch das 4,4-Diethylsemicarbazid (R¹ = R² = Ethyl) gemäß C. Vogelesang (Rec. Trav. Chim. 1943, 62, 5) oder wie in WO 98/47869 beschrieben hergestellt werden. Analog können weitere Semicarbazide durch Umsetzung von Hydrazin mit entsprechenden Carbamoylchloriden erhalten werden. Die somit erhaltenen Semicarbazide können in einer nächsten Stufe durch Reaktion mit entsprechenden Aldehyden oder Ketonen in die gewünschten Semicarbazone gemäß Formel (I) überführt werden (vgl. auch Glöckler - Zur Chemie der 1,3,4-Oxadiazoliumsalze, Wissenschaftliche Arbeit im Fach Chemie an der Universität Konstanz, Juni **1994**).

Beispielhaft und nicht limitierend für die erfindungsgemäßen Alkyl- oder Dialkyl-Semicarbazone der allgemeinen Formel (I) werden als bevorzugte Vertreter Aceton-4,4-dimethylsemicarbazon (Ac-DMS), Methylethylketon-4,4-dimethylsemicarbazon (MEK-DMS), Dicyclopropylketon-4,4-dimethylsemicarbazon (DCyPr-DMS), Methylisobutylketon-4,4-dimethylsemicarbazon (MIBK-DMS), Cyclopentanon-4,4-dimethylsemicarbazon (CyPn-DMS), Cyclohexanon-4,4-dimethylsemicarbazon (CyHx-DMS), Aceton-4,4-diethylsemicarbazon (Ac-DES) oder Cyclopentanon-4,4-diethylsemicarbazon (CyPn-DES) eingesetzt.

Im Hinblick auf die zu härtenden Epoxidharze oder Epoxidharz-Zusammensetzungen umfassend mindestens ein Epoxidharz unterliegt die vorliegende Erfindung keinerlei Beschränkung. Es kommen insbesondere sämtliche handelsüblichen Produkte in Frage, die üblicherweise eine oder mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolack-Harzen sowie auf Basis von Anilin oder substituierten Anilinen wie beispielsweise p-Aminophenol oder 4,4'-Diaminodiphenylmethane können durch Verwendung der erfindungsgemäßen Härter oder in einem erfindungsgemäßen Verfahren besonders gut gehärtet werden.

Somit sind in Weiterbildung der vorliegenden Erfindung ebenso Epoxidharz-Zusammensetzungen umfassend a) mindestens ein Epoxidharz mit mindestens einer reaktiven Epoxidgruppe und b) mindestens einen Härter gemäß allgemeiner Formel (I) und/oder der oben beschriebenen Art Gegenstand der vorliegenden Erfindung, wobei die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst. Damit ist auch eine Epoxidharz-Zusammensetzung, insbesondere zur Herstellung von Composites oder Formteilen, Gegenstand dieser Erfindung, die umfasst:
a) ein Epoxidharz mit mindestens einer reaktiven Epoxidgruppe,
b) mindestens einen Härter aus der Gruppe der Alkyl- oder Dialkyl-Semicarbazone der allgemeinen Formel (I) oder Mischungen hiervon 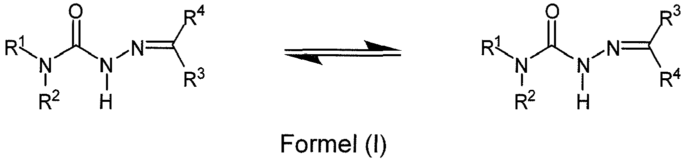
wobei für die Reste jeweils gleichzeitig oder unabhängig voneinander gilt:
R¹ = verzweigtes oder lineares Alkyl oder Cycloalkyl,
R² = Wasserstoff, verzweigtes oder lineares Alkyl oder Cycloalkyl,
R³ = verzweigtes oder lineares Alkyl oder Cycloalkyl;
R⁴ = Wasserstoff, verzweigtes oder lineares Alkyl oder Cycloalkyl;
oder
R¹ = verzweigtes oder lineares Alkyl oder Cycloalkyl,
R² = Wasserstoff, verzweigtes oder lineares Alkyl oder Cycloalkyl,
R³ und R⁴ = gemeinsam unter Bildung eines Ringes Alkylen,
wobei die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst.

Die Epoxidharz-Zusammensetzung umfasst neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen. Weiterhin bevorzugt umfasst diese Epoxidharz-Zusammensetzung ein Epoxidharz mit mindestens einer reaktiven Epoxidgruppe aus der Gruppe Epoxidharze auf Basis Glycidylpolyether von 2,2-Bis(4-hydroxyphenyl)propan (Bisphenol A), dessen mit Brom substituiertes Derivat (Tetrabrombisphenol A), Glycidylpolyether von 2,2-Bis(4-hydroxyphenyl)-methan (Bisphenol F) und/oder Glycidylpolyether von Novolac-Harzen.

Gemäß einer besonders bevorzugten Ausführung der vorliegenden Erfindung umfasst die Epoxidharz-Zusammensetzung den Härter aus der Gruppe der Alkyl- oder Dialkyl-Semicarbazone der allgemeinen Formel (I) oder Mischungen hiervon in einer Menge, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Besonders überraschend wurde festgestellt, dass somit eine Epoxidharz-Zusammensetzungen bereit gestellt werden kann, die eine besonders spannungsarme Härtung ermöglicht und somit besonders zur Herstellung von Composites oder Formteilen geeignet ist. In den somit unter Verwendung eines Härters aus der Gruppe der Semicarbazone hergestellten Formteilen sind keinerlei Risse oder sonstige thermische Schädigungen festzustellen. Die Härtung erfolgt hierbei über einen gegebenen Zeitraum besonders gleichmäßig, wodurch keine lokalen Überhitzungen oder Wärmestaus beobachtet werden. Somit kann auch eine Epoxidharz-Zusammensetzung zur Herstellung von Formteilen bereit bereitgestellt werden, die in Bezug auf die herzustellenden Formteile einen hohen Qualitätsstandard sichert.

Gemäß einer bevorzugten Epoxidharz-Zusammensetzung oder des hierein beschriebenen Verfahrens oder Verwendung ist gemäß der vorliegenden Erfindung insbesondere auch vorgesehen, dass die Epoxidharz-Zusammensetzung den Härter aus der Gruppe der Alkyl- oder Dialkyl-Semicarbazone der allgemeinen Formel (I) oder Mischungen hiervon in einer Menge umfasst, die während der Härtung bei einer Temperatur von 60 bis 180 °C, insbesondere von 60 bis 160 °C und ganz besonders bevorzugt von 60 bis 150 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet. Es kann jedoch auch vorgesehen sein, dass die Epoxidharz-Zusammensetzung den Härter aus der Gruppe der Alkyl- oder Dialkyl-Semicarbazone der allgemeinen Formel (I) oder Mischungen in einer Menge umfasst, die während der Härtung bei einer Temperatur von 80 bis 160 °C, insbesondere von 90 bis 160 °C und ganz besonders bevorzugt von 90 bis 140 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Gleichzeitig oder unabhängig hiervon kann vorgesehen sein, dass die Menge an Härter aus der Gruppe der Alkyl- oder Dialkyl-Semicarbazone der allgemeinen Formel (I) oder Mischungen hiervon derart eingestellt ist, dass ein maximaler Wärmestrom von 0,05 bis 0,99 W/ g, insbesondere 0,05 bis 0,80 W/ g, besonders bevorzugt 0,05 bis 0,70 W/ g und ganz besonders bevorzugt 0,05 bis 0,60 W/ g (bezogen auf die Masse der Epoxidharz-Zusammensetzung) in der Epoxidharz-Zusammensetzung erzeugt wird, so dass die Epoxidharz-Zusammensetzung vollständig aushärtet.

Die Mehrzahl der beschriebenen Semicarbazone gemäß allgemeiner Formel (I) wie beispielsweise Aceton-4,4-dimethylsemicarbazon, Cyclopentanon-4,4-dimethylsemicarbazon oder Cyclohexanon-4,4-dimethylsemicarbazon sind Feststoffe. Diese Härter sind aufgrund ihrer guten Lösungseigenschaften in Epoxidharzen besonders zur Härtung von Epoxydharzen oder Epoxidharz-Zusammensetzungen in Composites geeignet, die zum Einsatz in der Prepreg Technologie gebracht werden. Aufgrund ihrer guten Lösungseigenschaften sind diese Semicarbazone jedoch auch für die Herstellung von massiven Composite-Bauteilen, Formteilen im Infusions- bzw. Injektionsverfahren bestens geeignet.

Überraschenderweise wurde jedoch auch gefunden, dass die flüssigen Dimethyl-Semicarbazone wie z. B. Methyl-Ethylketon-4,4-dimethylsemicarbazon und Methylisobutylketon-4,4-dimethylsemicarbazon nicht nur in sehr niedriger Konzentration als Härter bei niedrigen Temperaturen, zwischen 70 und 100°C, mit Epoxydharz reagieren, sondern dass sie bei der Reaktion auch sehr wenig Wärme pro Zeiteinheit freisetzen. Diese Härter sind somit insbesondere für die Herstellung von massiven Composite-Bauteilen, Formteilen im Infusions- bzw. Injektionsverfahren gut geeignet. Insgesamt sind diese Epoxidharz-Zusammensetzungen umfassend Alkyl- oder Dialkyl-Semicarbazone der allgemeinen Formel (I) oder Mischungen hiervon, somit besonders zur Herstellung von Composites und Formteilen geeignet. Insbesondere sind diese Epoxidharz-Zusammensetzungen zum Einsatz in Prepregverfahren, verschiedene Infusions- oder Injektionsverfahren, hierbei insbesondere das RTM-Verfahren geeignet.

Damit ist auch die Verwendung der erfindungsgemäßen Härter aus der Gruppe der Alkyl- oder Dialkyl-Semicarbazonen der allgemeinen Formel (I) oder Mischungen hiervon, sowie deren Verwendung in einem Verfahren zur Härtung von mit Epoxidharz oder Epoxidharz-Zusammensetzungen imprägnierten oder beschichteten Fasermaterialien, Vliesstoffen, Geweben, Gewirken oder Geflechten Gegenstand der vorliegenden Erfindung.

Aufgrund der guten bis sehr guten Wärmeströme und auch gleichmäßigen und kontrollierten Härtung der Epoxidharz-Zusammensetzungen, sind die erfindungsgemäßen Härter aus der Gruppe der Semicarbazone besonders zur Herstellung von gehärteten Formteilen, insbesondere Hohlkörper, mit einer Schichtdicke oder Wandung von 0,5 bis 500 mm, insbesondere von 5 mm bis 400 mm, insbesondere zur Herstellung von Formteilen mittels Infusions- bzw. Injektionsverfahren, bestens geeignet.

Damit ist gemäß einer besonderen Ausführung auch die Verwendung von Alkyl- oder Dialkyl-Semicarbazon der allgemeinen Formel (I) oder Mischungen hiervon als Härter zur Härtung von Epoxidharz-Zusammensetzungen umfassend mindestens ein Epoxidharz mit mindestens einer reaktiven Epoxidgruppe, oder ein Verfahren zur Härtung von Epoxidharz-Zusammensetzungen umfassend mindestens ein Epoxidharz mit mindestens einer reaktiven Epoxidgruppe unter Verwendung von Alkyl- oder Dialkyl-Semicarbazon der allgemeinen Formel (I) oder Mischungen hiervon, wobei die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst, als Härter Gegenstand der vorliegenden Erfindung, in denen die Epoxidharz-Zusammensetzung eine Schichtdicke von mindestens 0,5 mm, insbesondere mindestens 2 mm, insbesondere mindestens 10 mm, besonders bevorzugt mindestens 20 mm und ganz besonders bevorzugt von mindestens 50 mm aufweist. Gleichzeitig oder unabhängig hiervon kann die Schichtdicke höchsten 500 mm betragen. Letztendlich ist damit auch ein Composite-Material Gegenstand der vorliegenden Erfindung, dass ein Verstärkungsmaterial, insbesondere ein Fasermaterial oder Vlies, Gewebe, Gewirke oder Geflecht aus Kohlefasern oder Glasfasern, und eine Epoxidharz-Zusammensetzung der hiermit beschriebenen Art und Merkmale umfasst.

Aufgrund der günstigen Anwendungseigenschaften der erfindungsgemäßen Härter sowie ihre kostengünstige Herstellung und einhergehend ein vorteilhaftes Kosten-Nutzen-Verhältnis sind diese besonders gut für eine technische und großtechnische Anwendung geeignet.

Im Folgenden wird die vorliegende Erfindung anhand von Beispielen erläutert, wobei die Erfindung jedoch nicht auf die Beispiele reduziert verstanden werden soll. Es ist vielmehr der Fall, dass jede Kombination von bevorzugten Ausführungen ebenfalls von der vorliegenden Erfindung umfasst wird.

### Beispiele

### A) Verwendete Harze

### Als Epoxidharz wurde eingesetzt:

| Bezeichnung | Zeichen | EEW | CAS-Nr. |
|---|---|---|---|
| Bisphenol A-Flüssigharz | Epikote 828 | 182 - 187 | [25068-38-6] |
| | durchschnittliches Molekulargewicht <= 700 Hexion Speciality Chemicals | | |

### B) Allgemeine Herstellung von Semicarbazonen gemäß Formel (I)

### a) Synthese der Semicarbazide

Der synthetische Zugang zum 4,4-Dimethylsemicarbazid (R¹ = R² =Methyl - (II)) als auch zum 4,4-Diethylsemicarbazid (R¹ = R² =Ethyl - (III)) gelingt über literaturbekannte Verfahren wie sie z. B. von C. Vogelesang (Rec. Trav. Chim. 1943, 62, 5) oder in WO 98/47869 veröffentlicht sind. Exemplarisch nach dem Beispiel 26 der Patentschrift WO 98/47869 verdeutlicht, werden zur Herstellung von 4,4-Dimethylsemicarbazid (II) äquimolare Mengen Hydrazinhydrat und Dimethylcarbamoylchlorid in den Lösungsmitteln Ethanol und Diethylether unter Eisbadkühlung tropfenweise zur Reaktion gebracht und 1 Stunde unter Eisbadkühlung nachreagiert. Nach Filtration des ausgefallenen Feststoffs entsteht durch Aufkonzentration der Reaktionsmischung die Zielverbindung (II) als weißer, kristalliner Feststoff.

### b) Synthese der Semicarbazone

Im Folgenden werden die gemäß a) hergestellten Semicarbazide mit Ketonen zu den gewünschten Semicarbazonen umgesetzt. Wiederum exemplarisch herausgegriffen sei die Verdeutlichung der allgemein anwendbaren Umsetzung der Semicarbazide (II) oder (III) zu den erfindungsgemäßen Semicarbazonen am Beispiel des Cylcopentanon-4,4-dimethylsemicarbazons (R¹ = R² = Methyl; R³ und R⁴ = -(CH₂)₄-). Nach Glöckler (Zur Chemie der 1,3,4-Oxadiazoliumsalze, Wissenschaftliche Arbeit im Fach Chemie an der Universität Konstanz, Juni **1994**) wird hierzu Cyclopentanon im 5-fachen Überschuss mit dem Semicarbazid (II) in siedendem Ethanol zur Reaktion gebracht. Nach 45 min ist die Reaktion beendet und nach dem Abdampfen des Lösungsmittels und des überschüssigen Ketons erhält man durch Rühren des Rückstands unter eiskaltem Pentan ein farbloses bis leicht gelbliches Pulver. Die Struktur und Zusammensetzung wurde durch IR- und NMR (¹H, ¹³C)-spektroskopische Untersuchungen sowie durch CHN-Analyse bestätigt.

Analog werden die hier genannten Semicarbazone hergestellt.

### C) erfindungsgemäße Härter

| Bezeichnung | | | Zeichen | CAS-Nr. |
|---|---|---|---|---|
| **Aceton-4,4-dimethylsemicarbazon** | | | | |
| | | | **Ac-DMS** | **[130652-43-6]** |
| C₆H₁₃N₃O (143,19) | ber. | C 50,33 % | H9,15% | N 29,35 % |
| | gef. | C 48,97 % | H 9,02 % | N 28,47 % |
| | | | | |

| **Methylethylketon-4,4-dimethylsemicarbazon** | | | | |
|---|---|---|---|---|
| | | | **MEK-DMS** | **[keine CAS-Nr.]** |
| C₇H₁₅N₃O (157,21) | ber. | C 53,48 % | H 9,62 % | N 26,73 % |
| | gef. | C 53,88 % | H 9,70 % | N 25,48 % |
| | | | | |

| **Methylisobutylketon-4,4-dimethylsemicarbazon** | | | | |
|---|---|---|---|---|
| | | | **MIBK-DMS** | **[keine CAS-Nr.]** |
| C₉H₁₉N₃O (185,27) | ber. | C 58,35 % | H 10,34 % | N 22,68 % |
| | gef. | C 57,71 % | H 10,76 % | N 22,30 % |
| | | | | |

| **Cyclopentanon-4,4-dimethylsemicarbazon** | | | | |
|---|---|---|---|---|
| | | | **CyPn-DMS** | **[keine CAS-Nr.]** |
| C₈H₁₅N₃O (169,22) | ber. | C 56,78 % | H 8,93 % | N 24,83 % |
| | gef. | C 56,72 % | H 8,96 % | N 24,83 % |

| **Cyclohexanon-4,4-dimethylsemicarbazon** | | | | |
|---|---|---|---|---|
| | | | **CyHx-DMS** | **[keine CAS-Nr.]** |
| C₉H₁₇N₃O (183,25) | ber. | C 58,99 % | H 9,35 % | N 22,93 % |
| | gef. | C 58,21 % | H 9,05 % | N 23,22 % |
| | | | | |

| **Aceton-4,4-diethylsemicarbazon** | | | | |
|---|---|---|---|---|
| | | | **Ac-DES** | **[14850-53-4]** |
| C₈H₁₇N₃O (171,24) | ber. | C 56,11 % | H 10,01 % | N 24,54 % |
| | gef. | C 55,68 % | H 10,49 % | N 24,33 % |

### D) Zusammensetzung mit erfindungsgemäßer Epoxidharz-Zusammensetzungen

Die Erfindung wird hier am Beispiel einer Epoxidharz-Zusammensetzung mit folgenden Anteilen gezeigt:

### Epikote 828 (100 Teile) : Härter (7 Teile)

### E) Untersuchungen

### i) Herstellung der Probe

Zur Bereitung der Harz-Härter-Formulierung wurden die Komponenten in den angegebenen Verhältnissen in eine Porzellanreibschale eingewogen und von Hand homogen durchmischt.

### ii) Ermittlung der Gelzeit

Etwa 700 - 800 mg der frisch zubereiteten Probe wurden in ein Aluminiumtiegelchen eingewogen, welches in einen auf die angegebene Temperatur vortemperierten Heizblock eingeführt wurde (Start der Zeitnahme). Die Prüfung auf Gelierung geschah mittels eines Holzspießchens, welches in das flüssige Harz eingetaucht wurde. Ergab sich beim Herausziehen ein stabiler Faden (kein Abtropfen mehr), so wurde diese Zeit als Gelzeit definiert.

### iii) Durchführung der DSC-Messungen mittels eines Wärmestrom-Differenzkalorimeter (DSC822e, Mettler Toledo):

a) dynamisch: Als Temperaturprogramm für die Bestimmung der Peak-Temperatur (DSC Peak T) wird mit einer Rate von 10 K/min von 30 - 250 (nach Bedarf bis 400 °C) aufgeheizt. Die Onset-Temperatur wird aus der selben Messung durch anlegen der Tangente an den Reaktionspeak bestimmt. Der Energieinhalt wird durch Integration der Fläche unter dem Peak aus der selben Messung berechnet.
b) isotherm: Für die Ermittlung der isothermen Reaktionszeit und des maximalen Wärmestroms (Peak bei isothermer DSC-Messung bei gegebener Temperatur) wird die Probe mit einer Rate von 20 K/min von 30 °C auf die angegebene Soll-Temperatur T aufgeheizt und anschließend für die Zeit t konstant gehalten. Die Reaktion ist beendet, wenn der Wärmestrom nach dem Maximum wieder die Basislinie bei der gegebenen Temperatur erreicht hat. Bei der Auswertung des zeitlichen Verlaufs entspricht der positive Peak dem maximalen Wärmestrom der Härtungsreaktion. Die integrierte Fläche unter dem Peak derselben Messung ist der Energieinhalt der Reaktion. Die Onset-Temperatur wird aus derselben Messung durch anlegen der Tangente an den Reaktionspeak bestimmt.

### iv) Messung der Glasübergangstemperatur mittels DSC (End-Tg)

Für die Bestimmung der max. erreichbaren Glasübergangstemperatur (End-Tg) wurde die vorgelierte Probe aus der Gelzeitbestimmung herangezogen. Die Probe wurde durch Erhitzen auf 200°C (DSC-Temperaturprogramm: 30 bis 200°C, Heizrate 20 K/min) und 30 min Halten der Temperatur vollständig ausgehärtet. Nach dem Abkühlung auf 30°C wurde die Probe mit einer Aufheizrate von 10 K/min erneut von 30 auf 200°C aufgeheizt und aus der Heizkurve durch Anlegen der Tangente im Wendepunkt der größten Änderung der Wärmekapazität (ΔCp) der Tg bestimmt.

### v) Durchführung der Latenzexperimente

Zur Ermittlung der Latenz (Lagerstabilität) wurden ca. 10 g der Probe frisch bereitet und diese bei der angegebenen Temperatur in einem Ofen temperiert. Als Maß für die fortschreitende Vernetzung (Härtung) der Epoxidharzmasse wurde zum jeweiligen Messzeitpunkt die dyn. Viskosität einer Probe bei 25°C in einem Kegel(1°)-Platte-Rheometer ermittelt.

Die Auswertung der Experimente geschah durch Auftragen des prozentualen Viskositätsanstiegs (%) über der Zeit in Stunden (h) oder Tagen (d) sowie Extrapolation der Einzeldaten mittels einer exponentiellen oder potenziellen mathematischen Funktion.

### vi) Durchführung der Infusion - Aufbau:

| Faserverbund - Aufbau | | |
|---|---|---|
| Bauteil | Material | Größe und Anzahl |
| Grundschicht | R&G Vakuumfolie Nr. 390160 | 15 x 26 cm |
| Abdichtung | Tacky Tape SM5126-1/2" x X1/8 " | ca. 85 cm |
| Trennfilm (unten) | Nylon Peel ply (Leinwandbindung 64 g/m³) versetzt | 10 x 19 cm |
| Laminat (Glasfaser) | Atlas FK 144 (296 g/m³) | 7 x 17 cm (3 Lagen) |
| Trennfilm (oben) | Nylon Peel ply (Leinwandbindung 64 g/m³) versetzt | 10 x 19 cm |
| Trennfilm | R&G Trennfolie Nr. 390190 | 11 x 22 cm |
| Belüftungsfilm (Breather) | R&G Vlies Nr. 390180 | 10 x 19 cm + 2 x (3x5 cm) |
| Vacuum mesh | Entlüftungsnetz 150 g/m³ (Laufrichtung - schwarz) | 8 x 8 cm |
| Vakuumfolie | R&G Vakuumfolie Nr. 390160 | 19 x 31 cm |
| Schläuche | PVC, klar (3,0 mm innen Ø, 5,0 mm außen Ø) | 2 x 45 cm |
| Bemerkungen: | Infusionsmischung auf 40°-44 °C angewärmt; Aufbau wurde auf einer Heizplatte ausgehärtet | |

Die Härtermischung wird vorab auf 40°C erwärmt (Erniedrigung der Viskosität) und dann mittels einer Vakuumpumpe (ca. 12 mbar) in den Glasfaseraufbau (drei Glasfaserlagen a ca. 0,27 mm Schichtdicke) hinein gezogen. Die Vakuummembranpumpe wird abgeschaltet, sobald der komplette Glasfaseraufbau getränkt ist plus einer Minute Nachsaugzeit. Das getränkte Bauteil wird auf einer Heizplatte mehrere Stunden bei 100°C ausgehärtet.

### vii) Verwendete Analysengeräte

| | | |
|---|---|---|
| Gelzeit | Heizblock | VLM 2.0 HT |
| DSC-Messungen | DSC-Gerät | Mettler-Toledo DSC 822 |
| Viskosität | Rheometer | Haake RheoStress 1 |

### viii) Bestimmung Gelzeit, dyn. DSC und End-Tg sowie Latenzen bei 23°C

**Tabelle 1: Gelzeit, dyn. DSC und End-Tg**

| Härter [Teile] | Gelzeit bei 140°C [min : sek] | DSC-Peak-Temperatur [°C] | End-Tg (DSC) [°C] | Isotherm Peak (DSC) [°C / min:sec] | max. Wärmestrom (Isotherm DSC) [°C / Wg⁻¹] |
|---|---|---|---|---|---|
| | | | | | |
| Ac-DMS (7,0 Teile) | 32 : 00 | 182,2 | 86,4 | 100 / 25:15 | 100 / 0.11 |
| | | | | | |
| MEK-DMS (7,0 Teile) | 29 : 00 | 183,1 | 83,9 | 100 / 18:50 | 100 / 0.075 |
| | | | | | |
| MIBK-DMS (7,0 Teile) | 29 : 30 | 192,1 | 88,7 | 100 / 24:15 | 100 / 0.06 |

**Tabelle 2: Latenz bei 23°C in Tagen (d)**

| | Prozentualer Anstieg der Viskosität als Maß der Latenz | | | | |
|---|---|---|---|---|---|
| Härter [Teile] | 20% | 50% | 100% | 300% | fest |
| | | | | | |
| Ac-DMS (7,0 Teile) | 0,5 d | 1 d | 3 d | 7 d | > 18 d |
| | | | | | |
| MEK-DMS (7,0 Teile) | 0,5 d | 1 d | 2 d | 4 d | > 14 d |
| | | | | | |
| MIBK-DMS (7,0 Teile) | 0,5 d | 2 d | 4 d | 9 d | > 21 d |
| | | | | | |

### ix) Härtung von Composites mittels Infusionsverfahren

**Tabelle 3: Infusion**

| Härter [Teile] | Infusionszeit [min] | Härtezeit [Std.] | Kalt-Tg [°C] | Stärke des Bauteils [mm] | Faseranteil des Bauteils [%] |
|---|---|---|---|---|---|
| | | | | | |
| Ac-DMS (7,0 Teile) | 2 | 5,5 | 104 | 0,81 | 67 |
| | | | | | |
| MEK-DMS (7,0 Teile) | 3 | 5,5 | 96 | 0,82 | 68 |
| | | | | | |
| MIBK-DMS (7,0 Teile) | 3 | 5,5 | 97 | 0,81 | 67 |
| | | | | | |

## Patentansprüche

1. Verwendung von Alkyl- oder Dialkyl-Semicarbazonen der allgemeinen Formel (I) oder Mischungen hiervon 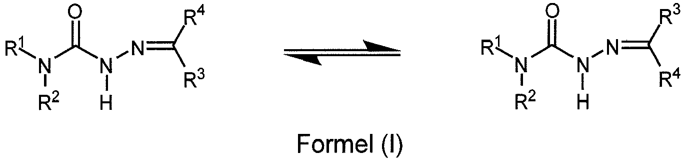 wobei für die Reste jeweils gleichzeitig oder unabhängig voneinander gilt:
R¹ = verzweigtes oder lineares Alkyl oder Cycloalkyl,
R² = Wasserstoff, verzweigtes oder lineares Alkyl oder Cycloalkyl,
R³ = verzweigtes oder lineares Alkyl oder Cycloalkyl, und
R⁴ = Wasserstoff, verzweigtes oder lineares Alkyl oder Cycloalkyl;
oder
R¹ = verzweigtes oder lineares Alkyl oder Cycloalkyl,
R² = Wasserstoff, verzweigtes oder lineares Alkyl oder Cycloalkyl, und
R³ und R⁴ = gemeinsam unter Bildung eines Ringes Alkylen;
als Härter zur Härtung von Epoxidharzen mit mindestens einer reaktiven Epoxidgruppe oder von Epoxidharz-Zusammensetzungen, umfassend mindestens ein Epoxidharz mit mindestens einer reaktiven Epoxidgruppe,
**dadurch gekennzeichnet, dass**
die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst.

2. Verfahren zur kontrollierten Härtung von Epoxidharz-Zusammensetzungen umfassend mindestens ein Epoxidharz mit mindestens einer reaktiven Epoxidgruppe, mittels Alkyl- oder Dialkyl-Semicarbazonen der allgemeinen Formel (I) oder Mischungen hiervon als Härter, 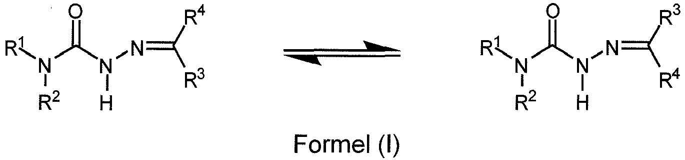 wobei für die Reste jeweils gleichzeitig oder unabhängig voneinander gilt:
R¹ = verzweigtes oder lineares Alkyl oder Cycloalkyl,
R² = Wasserstoff, verzweigtes oder lineares Alkyl oder Cycloalkyl,
R³ = verzweigtes oder lineares Alkyl oder Cycloalkyl;
R⁴ = Wasserstoff, verzweigtes oder lineares Alkyl oder Cycloalkyl;
oder
R¹ = verzweigtes oder lineares Alkyl oder Cycloalkyl,
R² = Wasserstoff, verzweigtes oder lineares Alkyl oder Cycloalkyl, und
R³ und R⁴ = gemeinsam unter Bildung eines Ringes Alkylen, **dadurch gekennzeichnet, dass**
die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst.

3. Verwendung oder Verfahren gemäß Anspruch 1 oder 2, **dadurch gekennzeichnet, dass** die Epoxidharz-Zusammensetzung das Alkyl- oder Dialkyl-Semicarbazon der allgemeinen Formel (I) oder Mischungen hiervon in einer Menge umfasst, die während der Härtung bei einer Temperatur von 60 bis 180°C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

4. Verwendung oder Verfahren gemäß mindestens einem der vorgenannten Ansprüche, **dadurch gekennzeichnet, dass** als Alkyl- oder Dialkyl-Semicarbazon gemäß Formel (I) Aceton-4,4-dimethylsemicarbazon, Methylethylketon-4,4-dimethylsemicarbazon, Dicyclopropylketon-4,4-dimethylsemicarbazon, Methylisobutylketon-4,4-dimethylsemicarbazon, Cyclopentanon-4,4-dimethylsemicarbazon, Cyclohexanon-4,4-dimethylsemicarbazon, Aceton-4,4-diethylsemicarbazon oder Cyclopentanon-4,4-diethylsemicarbazon verwendet wird.

5. Verwendung oder Verfahren gemäß mindestens einem der vorgenannten Ansprüche, **dadurch gekennzeichnet, dass** das Epoxidharz ein Epoxidharz aus der Gruppe Epoxidharze auf Basis Glycidylpolyether von 2,2-Bis(4-hydroxyphenyl)propan (Bisphenol A), dessen mit Brom substituiertes Derivat (Tetrabrombisphenol A), Glycidylpolyether von 2,2-Bis(4-hydroxyphenyl)-methan (Bisphenol F) und/oder Glycidylpolyether von Novolac-Harzen ist.

6. Verwendung oder Verfahren gemäß mindestens einem der vorgenannten Ansprüche zur Härtung von mit Epoxidharz oder Epoxidharz-Zusammensetzungen imprägnierten oder beschichteten Fasermaterialien, Geweben, Gewirken oder Geflechten.

7. Verwendung oder Verfahren gemäß mindestens einem der vorgenannten Ansprüche zur Herstellung von gehärteten Formteilen, insbesondere Hohlkörper, mit einer Schichtdicke oder Wandung von 0,5 bis 500 mm.

8. Epoxidharz-Zusammensetzung zur Herstellung von Composites oder Formteilen umfassend
a) ein Epoxidharz mit mindestens einer reaktiven Epoxidgruppe,
b) mindestens einen Härter aus der Gruppe der Alkyl- oder Dialkyl-Semicarbazone der allgemeinen Formel (I) oder Mischungen hiervon 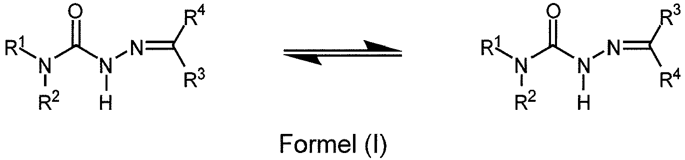
wobei für die Reste jeweils gleichzeitig oder unabhängig voneinander gilt:
R¹ = verzweigtes oder lineares Alkyl oder Cycloalkyl,
R² = Wasserstoff, verzweigtes oder lineares Alkyl oder Cycloalkyl,
R³ = verzweigtes oder lineares Alkyl oder Cycloalkyl; und
R⁴ = Wasserstoff, verzweigtes oder lineares Alkyl oder Cycloalkyl;
oder
R¹ = verzweigtes oder lineares Alkyl oder Cycloalkyl,
R² = Wasserstoff, verzweigtes oder lineares Alkyl oder Cycloalkyl, und
R³ und R⁴ = gemeinsam unter Bildung eines Ringes Alkylen.
**dadurch gekennzeichnet, dass** die Epoxidharz-Zusammensetzung neben dem Alkyl- oder Dialkyl-Semicarbazon der allgemeinen Formel (I) oder Mischungen hiervon keine weiteren Härter, Co-Härter, Härtungsbeschleuniger oder andere Katalysatoren zur Härtung von Epoxidharzen umfasst.

9. Epoxidharz-Zusammensetzung gemäß Anspruch 8, **dadurch gekennzeichnet, dass** das Epoxidharz ein Epoxidharz aus der Gruppe Epoxidharze auf Basis Glycidylpolyether von 2,2-Bis(4-hydroxyphenyl)propan (Bisphenol A), dessen mit Brom substituiertes Derivat (Tetrabrombisphenol A), Glycidylpolyether von 2,2-Bis(4-hydroxyphenyl)-methan (Bisphenol F) und/oder Glycidylpolyether von Novolac-Harzen ist.

10. Epoxidharz-Zusammensetzung gemäß Anspruch 8 oder 9, **dadurch gekennzeichnet, dass** die Epoxidharz-Zusammensetzung das Alkyl- oder Dialkyl-Semicarbazon der allgemeinen Formel (I) oder Mischungen hiervon in einer Menge umfasst, die während der Härtung bei einer Temperatur von 60 bis 180°C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

11. Composite-Material umfassend ein Verstärkungsmaterial und eine Epoxidharz-Zusammensetzung gemäß einem der Ansprüche 8 bis 10.

12. Composite-Material gemäß Anspruch 11, **dadurch gekennzeichnet, dass** das Composite-Material als Verstärkungsmaterial ein Fasermaterial oder ein Vlies, Gewebe, Gewirke oder Geflecht aus Kohlefasern oder Glasfasern umfasst.

## Claims

1. Use of alkyl or dialkyl semicarbazones of general formula (I) or mixtures thereof 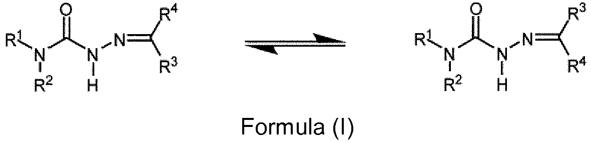 in which the following applies to the functional groups, in each case simultaneously or independently:
R¹ = branched or linear alkyl or cycloalkyl,
R²= hydrogen, branched or linear alkyl or cycloalkyl,
R³ = branched or linear alkyl or cycloalkyl, and
R⁴ = hydrogen, branched or linear alkyl or cycloalkyl,
or
R¹ = branched or linear alkyl or cycloalkyl,
R² = hydrogen, branched or linear alkyl or cycloalkyl, and
R³ and R⁴ = together forming an alkylene ring,
as curing agents for curing epoxy resins having at least one reactive epoxide group or epoxy resin compositions comprising at least one epoxy resin having at least one reactive epoxide group,
**characterised in that**
the epoxy resin composition does not comprise any further curing agents, co-curing agents, curing accelerators or other catalysts for curing epoxy resins in addition to the alkyl or dialkyl semicarbazone of general formula (I) or mixtures thereof.

2. Method for controlled curing of epoxy resin compositions comprising at least one epoxy resin having at least one reactive epoxide group, by means of alkyl or dialkyl semicarbazones of general formula (I) or mixtures thereof as curing agents, 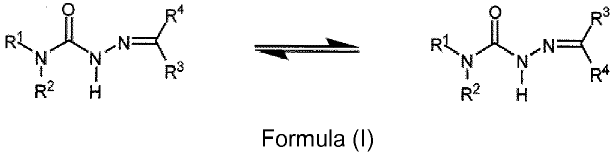 in which the following applies to the functional groups, in each case simultaneously or independently:
R¹ = branched or linear alkyl or cycloalkyl,
R²= hydrogen, branched or linear alkyl or cycloalkyl,
R³ = branched or linear alkyl or cycloalkyl,
R⁴ = hydrogen, branched or linear alkyl or cycloalkyl,
or
R¹ = branched or linear alkyl or cycloalkyl
R² = hydrogen, branched or linear alkyl or cycloalkyl, and
R³ and R⁴ = together forming an alkylene ring,
**characterised in that**
the epoxy resin composition does not comprise any further curing agents, co-curing agents, curing accelerators or other catalysts for curing epoxy resins in addition to the alkyl or dialkyl semicarbazone of general formula (I) or mixtures thereof.

3. Use or method according to either claim 1 or claim 2, **characterised in that** the epoxy resin composition comprises the alkyl or dialkyl semicarbazone of general formula (I) or mixtures thereof in an amount which, during curing at a temperature of from 60 to 180 °C, generates a maximum heat flow in the epoxy resin composition of from 0.05 to 0.99 W/g (based on the mass of the epoxy resin composition), and therefore the epoxy resin composition cures fully.

4. Use or method according to at least one of the preceding claims, **characterised in that** acetone-4,4-dimethylsemicarbazone, methylethylketone-4,4-dimethylsemicarbazone, dicyclopropylketone-4,4-dimethylsemicarbazone, methylisobutylketone-4,4-dimethylsemicarbazone, cyclopentanone-4,4-dimethylsemicarbazone, cyclohexanone-4,4-dimethylsemicarbazone, acetone-4,4-diethylsemicarbazone or cyclopentanone-4,4-diethylsemicarbazone is used as the alkyl or dialkyl semicarbazone according to formula (I).

5. Use or method according to at least one of the preceding claims, **characterised in that** the epoxy resin is an epoxy resin from the group of the epoxy resins based on glycidyl polyether of 2,2-bis(4-hydroxyphenyl)propane (bisphenol A), its bromine-substituted derivative (tetrabromobisphenol A), glycidyl polyether of 2,2-bis(4-hydroxyphenyl)methane (bisphenol F) and/or glycidyl polyether of novolac resins.

6. Use or method according to at least one of the preceding claims for curing fibrous materials, woven fabrics, knitted fabrics or meshes impregnated or coated with epoxy resin or epoxy resin compositions.

7. Use or method according to at least one of the preceding claims for producing cured moulded parts, in particular hollow articles, having a layer thickness or wall of from 0.5 to 500 mm.

8. Epoxy resin composition for producing composites or moulded parts, said epoxy resin composition comprising:
a) an epoxy resin having at least one reactive epoxide group,
b) at least one curing agent from the group of the alkyl or dialkyl semicarbazones of general formula (I) or mixtures thereof, 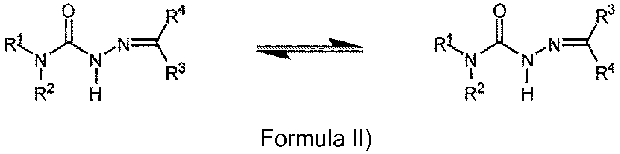
in which the following applies to the functional groups, in each case simultaneously or independently:
R¹ = branched or linear alkyl or cycloalkyl,
R² = hydrogen, branched or linear alkyl or cycloalkyl,
R³ = branched or linear alkyl or cycloalkyl, and
R⁴ = hydrogen, branched or linear alkyl or cycloalkyl,
or
R¹ = branched or linear alkyl or cycloalkyl,
R²= hydrogen, branched or linear alkyl or cycloalkyl, and
R³ and R⁴ = together forming an alkylene ring,
**characterised in that** the epoxy resin composition does not comprise any further curing agents, co-curing agents, curing accelerators or other catalysts for curing epoxy resins in addition to the alkyl or dialkyl semicarbazone of general formula (I) or mixtures thereof.

9. Epoxy resin composition according to claim 8, **characterised in that** the epoxy resin is an epoxy resin selected from the group of epoxy resins based on glycidyl polyether of 2,2-bis(4-hydroxyphenyl)propane (bisphenol A), its bromine-substituted derivative (tetrabromobisphenol A), glycidyl polyether of 2,2-bis(4-hydroxyphenyl)methane (bisphenol F) and/or glycidyl polyether of novolac resins.

10. Epoxy resin composition according to either claim 8 or claim 9, **characterised in that** the epoxy resin composition comprises the alkyl or dialkyl semicarbazone of general formula (I) or mixtures thereof in an amount which, during curing at a temperature of from 60 to 180 °C, generates a maximum heat flow in the epoxy resin composition of from 0.05 to 0.99 W/g (based on the mass of the epoxy resin composition), and therefore the epoxy resin composition cures fully.

11. Composite material comprising a reinforcing material and an epoxy resin composition according to any of claims 8 to 10.

12. Composite material according to claim 11, **characterised in that** the composite material comprises as the reinforcing material a fibrous material or a nonwoven fabric, woven fabric, knitted fabric or mesh made of carbon fibres or glass fibres.

## Revendications

1. Utilisation d'alkyl- ou dialkyl-semicarbazones de formule générale (I) ou de mélanges de celles-ci 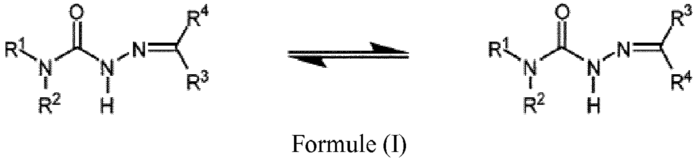 où est valable pour les groupements à chaque fois simultanément ou indépendamment les uns des autres:
R¹ = alkyle ramifié ou linéaire ou cycloalkyle,
R² = hydrogène, alkyle ramifié ou linéaire ou cycloalkyle,
R³ = alkyle ramifié ou linéaire ou cycloalkyle, et
R⁴ = hydrogène, alkyle ramifié ou linéaire ou cycloalkyle;
ou
R¹ = alkyle ramifié ou linéaire ou cycloalkyle,
R² = hydrogène, alkyle ramifié ou linéaire ou cycloalkyle, et
R³ et R⁴ = ensemble avec formation d'un cycle alkylène;
comme durcisseur pour le durcissement de résines époxydes ayant au moins un groupe époxyde réactif ou de compositions de résines époxydes, comprenant au moins une résine époxyde ayant au moins un groupe époxyde réactif,
**caractérisée en ce que**
la composition de résines époxydes, outre l'alkyl- ou dialkyl-semicarbazone de formule générale (I) ou des mélanges de celles-ci, ne comprend aucun autre durcisseur, codurcisseur, accélérateur de durcissement ou autres catalyseurs pour le durcissement de résines époxydes.

2. Procédé pour le durcissement contrôlé de compositions de résines époxydes, comprenant au moins une résine époxyde ayant au moins un groupe époxyde réactif, au moyen d'alkyl- ou dialkyl-semicarbazones de formule générale (I) ou de mélanges de celles-ci comme durcisseur, 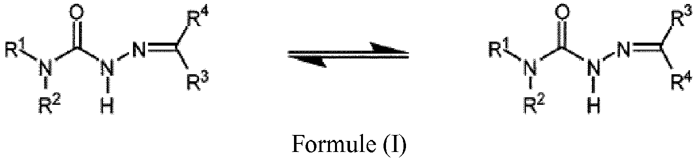 où est valable pour les groupements à chaque fois simultanément ou indépendamment les uns des autres:
R¹ = alkyle ramifié ou linéaire ou cycloalkyle,
R² = hydrogène, alkyle ramifié ou linéaire ou cycloalkyle,
R³ = alkyle ramifié ou linéaire ou cycloalkyle;
R⁴ = hydrogène, alkyle ramifié ou linéaire ou cycloalkyle;
ou
R¹ = alkyle ramifié ou linéaire ou cycloalkyle,
R² = hydrogène, alkyle ramifié ou linéaire ou cycloalkyle,
et
R³ et R⁴ = ensemble avec formation d'un cycle alkylène,
**caractérisé en ce que**
la composition de résines époxydes, outre l'alkyl- ou dialkyl-semicarbazone de formule générale (I) ou des mélanges de celles-ci, ne comprend aucun autre durcisseur, codurcisseur, accélérateur de durcissement ou autres catalyseurs pour le durcissement de résines époxydes.

3. Utilisation ou procédé selon la revendication 1 ou 2, **caractérisé en ce que** la composition de résines époxydes comprend l'alkyl- ou dialkyl-semicarbazone de formule générale (I) ou des mélanges de celles-ci en une quantité qui, pendant le durcissement à une température de 60 à 180°C, produit un flux de chaleur maximal de 0,05 à 0,99 W/g (rapporté à la masse de la composition de résines époxydes) dans la composition de résines époxydes, de sorte que la composition de résines époxydes durcit totalement.

4. Utilisation ou procédé selon au moins l'une des revendications précédentes, **caractérisé en ce que**, comme alkyl- ou dialkyl-semicarbazone selon la formule (I), l'acétone-4,4-diméthylsemicarbazone, la méthyléthylcétone-4,4-diméthylsemicarbazone, la dicyclopropylcétone-4,4-diméthylsemicarbazone, la méthylisobutylcétone-4,4-diméthylsemicarbazone, la cyclopentanone-4,4-diméthylsemicarbazone, la cyclohexanone-4,4-diméthylsemicarbazone, l'acétone-4,4-diéthylsemicarbazone ou la cyclopentanone-4,4-diéthylsemicarbazone est utilisée.

5. Utilisation ou procédé selon au moins l'une des revendications précédentes, **caractérisé en ce que** la résine époxyde est une résine époxyde du groupe des résines époxydes à base de glycidylpolyéther de 2,2-bis(4-hydroxyphényl)propane (bisphénol A), de son dérivé substitué avec le brome (tétrabromobisphénol A), de glycidylpolyéther de 2,2-bis(4-hydroxyphényl)-méthane (bisphénol F) et/ou de glycidylpolyéther de résines novolaques.

6. Utilisation ou procédé selon au moins l'une des revendications précédentes pour le durcissement de matériaux fibreux, de tissus, d'étoffes à mailles ou de tissages imprégnés ou revêtus de résines époxydes ou de compositions de résines époxydes.

7. Utilisation ou procédé selon au moins l'une des revendications précédentes pour la fabrication de pièces mises en forme durcies, en particulier de corps creux, ayant une épaisseur de couche ou paroi de 0,5 à 500 mm.

8. Composition de résines époxydes pour la fabrication de composites ou de pièces mises en forme comprenant
a) une résine époxyde ayant au moins un groupe époxyde réactif,
b) au moins un durcisseur du groupe des alkyl- ou dialkyl-semicarbazones de formule générale (I) ou des mélanges de celles-ci 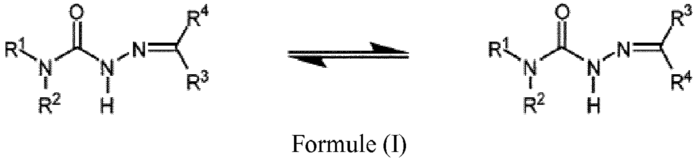
où est valable pour les groupements à chaque fois simultanément ou indépendamment les uns des autres:
R¹ = alkyle ramifié ou linéaire ou cycloalkyle,
R² = hydrogène, alkyle ramifié ou linéaire ou cycloalkyle,
R³ = alkyle ramifié ou linéaire ou cycloalkyle; et
R⁴ = hydrogène, alkyle ramifié ou linéaire ou cycloalkyle;
ou
R¹ = alkyle ramifié ou linéaire ou cycloalkyle,
R² = hydrogène, alkyle ramifié ou linéaire ou cycloalkyle,
et
R³ et R⁴ = ensemble avec formation d'un cycle alkylène;
**caractérisée en ce que** la composition de résines époxydes, outre l'alkyl- ou dialkyl-semicarbazone de formule générale (I) ou des mélanges de celles-ci, ne comprend aucun autre durcisseur, codurcisseur, accélérateur de durcissement ou autres catalyseurs pour le durcissement de résines époxydes.

9. Composition de résines époxydes selon la revendication 8, **caractérisée en ce que** la résine époxyde est une résine époxyde du groupe des résines époxydes à base de glycidylpolyéther de 2,2-bis(4-hydroxyphényl)propane (bisphénol A), de son dérivé substitué avec le brome (tétrabromobisphénol A), de glycidylpolyéther de 2,2-bis(4-hydroxyphényl)-méthane (bisphénol F) et/ou de glycidylpolyéther de résines novolaques.

10. Composition de résines époxydes selon la revendication 8 ou 9, **caractérisée en ce que** la composition de résines époxydes comprend l'alkyl- ou dialkyl-semicarbazone de formule générale (I) ou des mélanges de celles-ci en une quantité qui, pendant le durcissement à une température de 60 à 180°C, produit un flux de chaleur maximal de 0,05 à 0,99 W/g (rapporté à la masse de la composition de résines époxydes) dans la composition de résines époxydes, de sorte que la composition de résines époxydes durcit totalement.

11. Matériau composite comprenant un matériau de renfort et une composition de résines époxydes selon l'une des revendications 8 à 10.

12. Matériau composite selon la revendication 11, **caractérisé en ce que** le matériau composite comprend comme matériau de renfort un matériau fibreux ou un non-tissé, un tissu, une étoffe à mailles ou un tissage en fibres de carbone ou en fibres de verre.
